# EUROPÄISCHE PATENTANMELDUNG

(11) **EP 4 509 347 A1**
(43) Veröffentlichungstag der Anmeldung: **19.02.2025**
(21) Anmeldenummer: 24189610.9
(22) Anmeldetag: 18.07.2024
(51) Int. Cl.: B60L 53/10, B60L 53/16, B60L 53/31, H01R 13/50, H01R 13/504, H01R 13/639

(54) **LADESTATION, INSBESONDERE FÜR ELEKTROFAHRZEUGE**

(30) Priorität: 20.07.2023 DE 102023119224
(71) Anmelder: ads-tec Energy GmbH, 72622 Nürtingen (DE)
(72) Erfinder: SPEIDEL, Thomas, 71706 Markgröningen (DE)
(74) Vertreter: Kordel, Mattias

(57) **Zusammenfassung**

Die Erfindung betrifft eine Ladestation (1), insbesondere für Elektrofahrzeuge, mit mindestens einem, einen Ladestecker (3) zur elektrischen Verbindung mit einer zu ladenden elektrischen Vorrichtung aufweisenden Ladepunkt (5), und mit einem Steckeradapter (7), wobei der Steckeradapter (7) unlösbar fest mit dem Ladestecker (3) verbunden ist.

## Beschreibung

Die Erfindung betrifft eine Ladestation, insbesondere für Elektrofahrzeuge.

Zum Laden elektrischer Vorrichtungen, insbesondere von Elektrofahrzeugen an Ladestation haben sich in verschiedenen Regionen verschiedene Standards von Steckern und Buchsen etabliert. Dabei gibt es insbesondere Standards, die nur ein vergleichsweise langsames Laden mittels Wechselstroms erlauben, und Kombinations-Standards, bei denen die Lademöglichkeit über Wechselstrom und außerdem eine vergleichsweise schnellere Lademöglichkeit über Gleichstrom in einem gemeinsamen Stecker vorgesehen sind. Außerdem nutzen Schnellladestationen typischerweise das Kontaktbild des Wechselstromsteckers, um Informationen mit einer zu ladenden Vorrichtung auszutauschen, während die Gleichstromkontakte zum schnellen Laden verwendet werden. Derartige Kombinations-Standards können somit separate Kontaktsysteme für einerseits Gleichstrom und andererseits Wechselstrom aufweisen, wie beispielsweise CCS 1 oder CCS2, oder sie können für Gleichstrom und Wechselstrom ein identisches Kontaktsystem nutzen, wie beispielsweise NACS. An einer herkömmlichen Ladestation, insbesondere an Schnellladesäulen, ist typischerweise eine bestimmte Art Stecker fest verbaut, sodass elektrische Vorrichtungen wie beispielsweise Elektrofahrzeuge, die eine nicht zu dieser Art Stecker passende Ladebuchse aufweisen, nicht geladen werden können. Es sind zwar grundsätzlich auch Steckeradapter bekannt geworden, mit denen eine Art Stecker auf eine andere Art Buchse adaptiert werden kann, jedoch müssen solche Steckeradapter vom Benutzer der elektrischen Vorrichtung, beispielsweise in einem Elektrofahrzeug, umständlich mitgeführt werden. In bestimmten Bereichen der Welt haben sich verschiedene Arten von Steckern gleichsam als dominante Spezies durchgesetzt. So dominiert derzeit in den USA beispielsweise der CCS 1-Standard, während in Europa der CCS2-Standard dominiert. Sofern ein relativer Anteil anderer Standards in den entsprechenden Regionen steigt, oder auch schlicht um Nutzern anderer Standards einen höheren Komfort bereitzustellen, entsteht der Bedarf, zumindest einen bestimmten Anteil bestehender Ladestationen umzurüsten. Dabei ist jedoch ein Wechsel des ursprünglich verbauten Ladesteckers aufwendig und teuer.

Der Erfindung liegt daher die Aufgabe zugrunde, eine Ladestation - insbesondere für Elektrofahrzeuge - zu schaffen, wobei die genannten Nachteile zumindest reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem eine Ladestation, insbesondere für Elektrofahrzeuge, geschaffen wird, die mindestens einen Ladepunkt aufweist, der mindestens einen Ladestecker zur elektrischen Verbindung mit einer zu ladenden elektrischen Vorrichtung, insbesondere einem Elektrofahrzeug, aufweist. Die Ladestation weist außerdem einen Steckeradapter auf, der unlösbar fest mit dem Ladestecker verbunden ist. Vorteilhaft kann auf diese Weise eine bestehende Ladestation für andere, nicht mit dem Ladestecker kompatible Ladebuchse ertüchtigt sein, sodass für einen Benutzer einer zu ladenden elektrischen Vorrichtung die Notwendigkeit entfällt, selbst einen Steckeradapter mit sich zu führen. Insbesondere erlaubt die hier vorgeschlagenen Lösung eine einfache, schnelle und kostengünstige Nachrüstung bestehender Ladestationen, indem der Steckeradapter fest mit dem ursprünglichen Ladestecker der Ladestation verbunden wird. Indem der Steckeradapter unlösbar fest mit dem Ladestecker verbunden wird, wird zugleich einer unberechtigten Mitnahme des Steckeradapters vorgebeugt.

Unter "unlösbar fest verbunden" wird im Kontext der vorliegenden technischen Lehre insbesondere verstanden, dass der Steckeradapter derart mit dem Ladestecker verbunden ist, dass er nicht beschädigungs- oder zerstörungsfrei von dem Ladestecker gelöst werden kann.

In einer Ausführungsform weist die Ladestation eine Mehrzahl an Ladepunkten auf, wobei jedem Ladepunkt ein Ladestecker zugeordnet ist. In einer Ausgestaltung ist mit jedem der Ladestecker jeweils ein Steckeradapter unlösbar fest verbunden. In einer anderen Ausgestaltung ist nur mit einer Unterzahl der Ladestecker jeweils ein Steckeradapter unlösbar fest verbunden, wobei die Unterzahl kleiner ist als eine Gesamtzahl der Ladestecker; insbesondere ist in einer Ausgestaltung nur mit einem Ladestecker genau eines Ladepunkts ein Steckeradapter unlösbar fest verbunden. Auf diese Weise kann eine Ladestation mehrere verschiedene Steckverbindungstypen bereithalten, die zu verschiedenen Ladebuchsen kompatibel sind. Die Ladestation ist dadurch besonders flexibel für verschiedene Benutzer nutzbar.

Als Ladestation wird in der Elektrotechnik jedwede, insbesondere stationäre oder mobile, Vorrichtung oder elektrische Anlage bezeichnet, welche dazu dient, mobilen akkubetriebenen elektrischen Vorrichtungen, Geräten, Maschinen oder Kraftfahrzeugen durch einfaches Einstellen oder Einstecken Energie zuzuführen, ohne den Antriebsenergiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen. Bekannt sind hier insbesondere Gleichstrom-Schnellladesysteme (high performance charging systems oder high power charging systems, HPC-Systeme) wie das in Europa verbreitete, sogenannte kombinierte Ladesystem (combined charging system, CCS). Beim gattungsmäßigen Gleichstromladen wird Gleichstrom aus der Ladestation direkt in die Batterie des Fahrzeugs eingespeist und hierzu durch einen leistungsstarken Gleichrichter, bevorzugt der Ladestation, vom Stromnetz oder durch große Pufferakkumulatoren an z.B. Solartankstellen bereitgestellt. Im Fahrzeug befindet sich ein Batteriemanagementsystem, das mit der Ladestation direkt oder indirekt kommuniziert, um die Stromstärke und -spannung anzupassen oder bei Erreichung einer vorbestimmten Kapazitätsgrenze den Vorgang zu beenden. Eine Leistungselektronik befindet sich hierbei üblicherweise in der Ladestation. Da die Gleichstromanschlüsse der Ladestation direkt - ohne Umweg über einen AC/DC-Wandler des Fahrzeugs - mit entsprechenden Anschlüssen der Traktionsbatterie verbunden werden, lassen sich verlustarm hohe Ladeströme übertragen, was kurze Ladezeiten ermöglicht.

In einer Ausführungsform ist die Ladestation als eine Ladesäule ausgebildet. Insbesondere weist die Ladestation mindestens einen Ladepunkt, insbesondere genau einen Ladepunkt oder genau zwei Ladepunkte, auf.

Insbesondere ist die Ladestation als Schnellladestation ausgebildet. In einer Ausführungsform ist die Ladestation als batteriegestützte Ladestation, insbesondere als batteriegestützte Schnellladestation, ausgebildet.

Gemäß einer Weiterbildung der Erfindung ist vorgesehen, dass der Steckeradapter mit dem Ladestecker stoffschlüssig verbunden ist. Alternativ oder zusätzlich ist vorgesehen, dass der Steckeradapter mit dem Ladestecker formschlüssig verbunden ist. Alternativ oder zusätzlich ist vorgesehen, dass der Steckeradapter mit dem Ladestecker kraftschlüssig verbunden ist. Auf jede dieser Weisen kann vorteilhaft eine feste, stabile und unlösbare Verbindung des Steckeradapters mit dem Ladestecker hergestellt werden.

Gemäß einer Weiterbildung der Erfindung ist vorgesehen, dass der Steckeradapter mit dem Ladestecker verklebt ist. Alternativ oder zusätzlich ist vorgesehen, dass der Steckeradapter mit dem Ladestecker verschweißt ist, insbesondere durch Kunststoffschweißen. Vorteilhaft kann auf diese Weisen eine ebenso feste wie besonders dichte, insbesondere feuchtigkeitsdichte Verbindung zwischen dem Steckeradapter und dem Ladestecker hergestellt werden.

Gemäß einer Weiterbildung der Erfindung ist vorgesehen, dass zumindest in einem Übergangsbereich zwischen dem Ladestecker und dem Steckeradapter eine den Übergangsbereich umgreifende Ummantelung angeordnet ist. Vorteilhaft kann mithilfe der Ummantelung der Übergangsbereich und damit insbesondere der Verbindungsbereich zwischen dem Ladestecker und dem Steckeradapter vor mechanischen Einflüssen und/oder eindringender Feuchtigkeit geschützt werden. Dies erhöht zugleich die Stabilität und Sicherheit der Verbindung.

Gemäß einer Weiterbildung der Erfindung ist vorgesehen, dass die Ummantelung einen Schrumpfschlauch aufweist oder als Schrumpfschlauch ausgebildet ist. Dieser Ausgestaltung der Ummantelung ist vorteilhaft ebenso einfach und kostengünstig wie dicht, insbesondere feuchtigkeitsdicht.

Gemäß einer Weiterbildung der Erfindung ist vorgesehen, dass der Steckeradapter mit dem Ladestecker mittels der Ummantelung, insbesondere mittels des Schrumpfschlauchs, verbunden ist. Vorteilhaft kann die Ummantelung auf diese Weise zwei Funktionen erfüllen, nämlich zugleich die Verbindung zwischen dem Steckeradapter und dem Ladestecker herzustellen als auch den Verbindungsbereich zu schützen, insbesondere vor mechanischen Einflüssen und/oder eindringender Feuchtigkeit.

Gemäß einer Weiterbildung der Erfindung ist vorgesehen, dass der Steckeradapter ein Buchsenteil und ein Steckerteil aufweist, wobei der Ladestecker in das Buchsenteil eingesteckt ist, wobei das Steckerteil eingerichtet ist, um mit einer Ladebuchse einer zu ladenden elektrischen Vorrichtung zusammenzuwirken, und wobei das Buchsenteil einen Steckverbindungstyp aufweist, der ausgewählt ist aus einer Gruppe, bestehend aus: CCS1, CCS2, Typ 1 oder J1772, GB/T, Typ 2 oder Mennekes, CHAdeMO, und NACS, wobei das Steckerteil einen anderen Steckverbindungstyp, ausgewählt aus derselben Gruppe, bestehend aus: CCS1, CCS2, Typ 1 oder J1772, GB/T, Typ 2 oder Mennekes, CHAdeMO, und NACS, aufweist.

In einer Ausführungsform weist das Buchsenteil den Steckverbindungstyp CCS1 und das Steckerteil den Steckverbindungstyp NACS auf. In einer anderen Ausführungsform weist das Buchsenteil den Steckverbindungstyp NACS und das Steckerteil den Steckverbindungstyp CCS1 auf. In einer anderen Ausführungsform weist das Buchsenteil den Steckverbindungstyp CCS2 und das Steckerteil den Steckverbindungstyp NACS auf. In einer anderen Ausführungsform weist das Buchsenteil den Steckverbindungstyp NACS und das Steckerteil den Steckverbindungstyp CCS2 auf. In weiteren Ausführungsformen sind grundsätzlich alle denkbaren Kombinationen bereits existenter oder auch zukünftiger Steckverbindungstypen möglich.

In einer Ausgestaltung ist der Ladestecker in das Buchsenteil eingesteckt und mit dem Buchsenteil unlösbar fest verbunden.

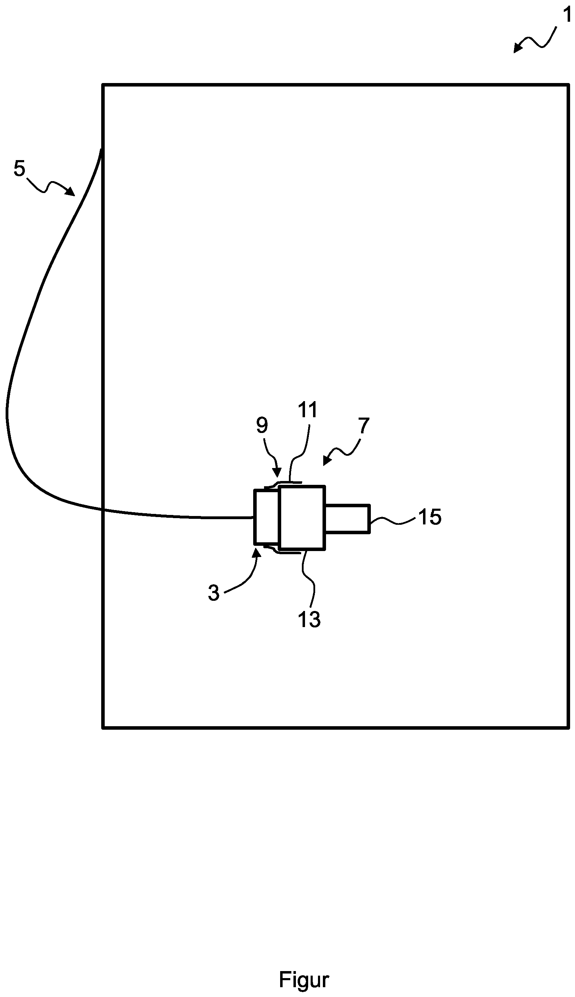

Die Erfindung wird im Folgenden anhand der Zeichnung näher erläutert. Dabei zeigt die einzige:
- Figur: eine schematische Darstellung eines Ausführungsbeispiels einer Ladestation mit einem Steckeradapter.

Die einzige Fig. zeigt eine schematische Darstellung eines Ausführungsbeispiels einer Ladestation 1.

Die Ladestation 1, die insbesondere eingerichtet ist zum Laden eines Antriebsenergiespeichers eines Elektrofahrzeugs, weist mindestens einen Ladepunkt 5 mit einem Ladestecker 3 zur elektrischen Verbindung mit einer zu ladenden elektrischen Vorrichtung - insbesondere mit dem Elektrofahrzeug - auf. Außerdem weist die Ladestation 1 einen Steckeradapter 7 auf, der unlösbar fest mit dem Ladestecker 3 verbunden ist.

Die Ladestation 1 kann eine Mehrzahl an Ladepunkten 5 aufweisen, wobei insbesondere jedem Ladepunkt 5 ein Ladestecker 3 zugeordnet sein kann. Es ist möglich, dass mit einer Unterzahl der Ladestecker 3, die geringer ist als eine Gesamtzahl der Ladestecker 3, jeweils ein Steckeradapter 7 verbunden ist. Insbesondere kann nur mit genau einem Ladestecker 3 einer Mehrzahl an Ladesteckern 3 ein Steckeradapter 7 verbunden sein. Es ist aber auch möglich, dass mit jedem Ladestecker 3 jeweils ein Steckeradapter 7 verbunden ist.

Der Steckeradapter 7 ist vorzugsweise mit dem Ladestecker 3 stoffschlüssig verbunden. Alternativ oder zusätzlich ist der Steckeradapter 7 mit dem Ladestecker 3 formschlüssig verbunden. Alternativ oder zusätzlich ist der Steckeradapter 7 mit dem Ladestecker 3 kraftschlüssig verbunden.

Besonders bevorzugt ist der Steckeradapter 7 mit dem Ladestecker 3 verklebt oder verschweißt, insbesondere durch Kunststoffschweißen.

Vorzugsweise ist zumindest in einem Übergangsbereich 9 zwischen dem Ladestecker 3 und dem Steckeradapter 7 eine den Übergangsbereich 9 umgreifende Ummantelung 11 angeordnet, insbesondere um den Übergangsbereich 9 und damit insbesondere einen Verbindungsbereich zwischen dem Ladestecker 3 und dem Steckeradapter 7 vor mechanischen Einflüssen und/oder eindringender Feuchtigkeit zu schützen. Bevorzugt weist die Ummantelung 11 einen Schrumpfschlauch auf, oder sie ist als Schrumpfschlauch ausgebildet.

Insbesondere ist es möglich, dass der Steckeradapter 7 mit dem Ladestecker 3 mittels der Ummantelung 11, insbesondere mittels des Schrumpfschlauchs, verbunden ist.

Der Steckeradapter 7 weist ein Buchsenteil 13 und ein Steckerteil 15 auf. Das Buchsenteil 13 ist eingerichtet, um mit dem Ladestecker 3 zusammenzuwirken. Das Steckerteil 15 ist eingerichtet, um mit einer Ladebuchse der zu ladenden elektrischen Vorrichtung, insbesondere des Elektrofahrzeugs, zusammenzuwirken.

Bevorzugt weist das Buchsenteil 13 einen Steckverbindungstyp aufweist, der ausgewählt ist aus einer Gruppe, bestehend aus: CCS1, CCS2, Typ 1 oder J1772, GB/T, Typ 2 oder Mennekes, CHAdeMO, und NACS. Das Steckerteil 15 weist einen anderen Steckverbindungstyp, ausgewählt aus derselben Gruppe, auf.

## Patentansprüche

1. Ladestation (1), insbesondere für Elektrofahrzeuge, mit mindestens einem, einen Ladestecker (3) zur elektrischen Verbindung mit einer zu ladenden elektrischen Vorrichtung aufweisenden Ladepunkt (5), und mit einem Steckeradapter (7), wobei der Steckeradapter (7) unlösbar fest mit dem Ladestecker (3) verbunden ist.

2. Ladestation (1) nach Anspruch 1, wobei der Steckeradapter (7) mit dem Ladestecker (3) stoffschlüssig, formschlüssig und/oder kraftschlüssig verbunden ist.

3. Ladestation (1) nach einem der vorhergehenden Ansprüche, wobei der Steckeradapter (7) mit dem Ladestecker (3) verklebt und/oder verschweißt ist.

4. Ladestation (1) nach einem der vorhergehenden Ansprüche, wobei zumindest in einem Übergangsbereich (9) zwischen dem Ladestecker (3) und dem Steckeradapter (7) eine den Übergangsbereich (9) umgreifende Ummantelung (11) angeordnet ist.

5. Ladestation (1) nach Anspruch 4, wobei die Ummantelung (11) einen Schrumpfschlauch aufweist oder als Schrumpfschlauch ausgebildet ist.

6. Ladestation (1) nach einem der Ansprüche 4 oder 5, wobei der Steckeradapter (7) mit dem Ladestecker (3) mittels der Ummantelung (11), insbesondere mittels des Schrumpfschlauchs, verbunden ist.

7. Ladestation (1) nach einem der vorhergehenden Ansprüche, wobei der Steckeradapter (7) ein Buchsenteil (13) und ein Steckerteil (15) aufweist, wobei der Ladestecker (3) in das Buchsenteil (13) eingesteckt ist, wobei das Steckerteil (15) eingerichtet ist, um mit einer Ladebuchse einer zu ladenden elektrischen Vorrichtung zusammenzuwirken, und wobei das Buchsenteil (13) einen Steckverbindungstyp aufweist, der ausgewählt ist aus einer Gruppe, bestehend aus: CCS1, CCS2, Typ 1 oder J1772, GB/T, Typ 2 oder Mennekes, CHAdeMO, und NACS, wobei das Steckerteil (15) einen anderen Steckverbindungstyp, ausgewählt aus derselben Gruppe aufweist.
